Europäisches Patentamt

European Patent Office

Office européen des brevets

(19)

(11) Numéro de publication: **0 121 953**
A1

## (12) DEMANDE DE BREVET EUROPEEN

(21) Numéro de dépôt: 84200261.0

(22) Date de dépôt: 24.02.84

(51) Int. Cl.³: **A 44 C 11/02,** F 16 B 45/04

(30) Priorité: 04.03.83 CH 1186/83

(43) Date de publication de la demande: 17.10.84
Bulletin 84/42

(84) Etats contractants désignés: DE FR GB IT NL

(71) Demandeur: **Calabrese, Vincent, Montchoisi, 2,
CH-1006 Lausanne (CH)**

(72) Inventeur: **Calabrese, Vincent, Montchoisi, 2,
CH-1006 Lausanne (CH)**

(74) Mandataire: **Meylan, Robert Maurice et al, c/o BUGNION
S.A. 10, route de Florissant Case Postale 375,
CH-1211 Genève 12 - Champel (CH)**

(54) Fermoir destiné à relier les deux extrémités d'un article souple formant une boucle.

(57) Le fermoir comprend une pièce de liaison (1) présentant une encoche (2) et un logement axial (4) dans lequel est logé un ressort (9). Autour de cette pièce de liaison est monté un élément tubulaire (7) muni d'une encoche (11) et d'un élément (8) venant s'appuyer sur le ressort (9) de telle sorte que l'élément tubulaire ferme l'encoche (2) retenant une attache (14). L'ouverture du fermoir s'effectue en poussant l'élément tubulaire (7). Selon une autre forme d'exécution la pièce de liaison présente une extrémité en forme de pince ouverte, maintenue fermée par un rétrécissement de la pièce tubulaire, la pince venant s'engager dans une rainure d'une attache axiale.

- 1 -

## Fermoir destiné à relier les deux extrémités d'un article souple formant une boucle.

La présente invention a pour objet un fermoir destiné à relier les deux extrémités d'un article souple formant une boucle, comprenant une pièce de liaison autour de laquelle est montée une pièce tubulaire susceptible de se déplacer axialement sur la pièce de liaison pour verrouiller, respectivement libérer une attache destinée à être fixée à l'une des extrémités de l'article à fermer. Ce fermoir est destiné notamment, mais non exclusivement, à des chaînettes de bijouterie.

Des fermoirs de ce type sont décrits dans les brevets CH.629.944 et 428.291. Dans ces deux exécutions, l'ouverture du fermoir se fait en retenant l'extrémité de la chaînette détachable du fermoir et en tirant en arrière la pièce tubulaire de verrouillage. On doit donc exercer une traction sur l'attache. Une telle traction va non seulement à l'encontre de la libération de cette attache, mais si elle est trop forte elle peut entraîner la rupture de la chaînette. En outre, lorsque ces chaînettes sont portées autour du coup, l'opération d'ouverture doit s'effectuer derrière et elle est peu commode. Enfin, dans ces deux exécutions la pièce tubulaire doit être tirée en arrière pour permettre l'accrochage de l'attache et de plus elle reste en position ouverte lorsqu'on la relâche.

Les fermoirs du type à mousqueton ne présentent certes pas tous ces inconvénients, mais ils se prêtent mal à une miniaturisation.

La présente invention a pour but de réaliser un fermoir d'un maniement aisé, offrant une grande sécurité, évitant une traction de la chaînette lors de l'ouverture et susceptible d'être exécuté dans des très petites dimensions.

A cet effet le fermoir selon l'invention est caractérisé par le fait que la pièce tubulaire est maintenue en position verrouillée par un ressort logé dans la pièce de liaison à l'opposé de l'attache verrouillée, de telle sorte que la libération de l'attache, c'est-à-dire l'ouverture du fermoir, s'effectue par le déplacement de la pièce tubulaire en direction de l'attache, en comprimant ledit ressort.

L'ouverture du fermoir se faisant par le déplacement de la pièce tubulaire en direction de l'attache, cette dernière ne subit aucune traction, mais elle est au contraire complètement libre de se dégager du fermoir. En outre, le ressort ramène automatiquement la pièce tubulaire en position de verrouillage lorsqu'on la

0121953

relâche. Par conséquent, lors de la fermeture du fermoir, la pièce tubulaire peut être déplacée par l'attache pour l'accrochage de celle-ci à la pièce de liaison, la pièce tubulaire revenant automatiquement verrouiller l'attache.

En variante il est possible de supprimer le ressort et de monter la pièce tubulaire à frottement gras sur la pièce de liaison.

Le dessin annexé représente, à titre d'exemple, deux formes d'exécution de l'invention.

La figure 1 représente une vue en coupe axiale d'une première forme d'exécution.

La figure 2 représente la pièce tubulaire seule.

La figure 3 représente une vue en coupe axiale d'une seconde forme d'exécution.

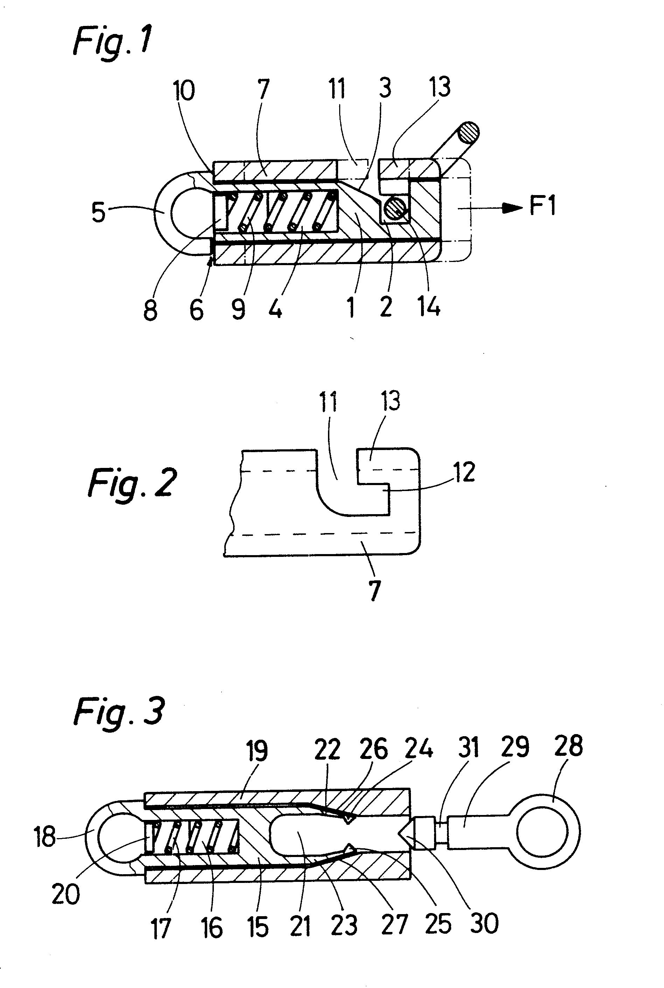

Le fermoir représenté à la figure 1 comprend une pièce de liaison métallique 1 de forme générale cylindrique présentant une encoche transversale 2 près de l'une de ses extrémités, encoche dont l'un des côtés est coupé par un plan incliné 3 débouchant à l'extérieur. La pièce de liaison 1 présente en outre un logement cylindrique axial 4 ouvert latéralement sur au moins une partie de sa profondeur. L'extrémité de la pièce de liaison 1 opposée à l'encoche 2 est munie d'une boucle 5, venue d'une pièce ou soudée à la pièce 1 et présentant une fente 6 pour la fixation de l'anneau d'extrémité d'une chaînette.

Autour de la pièce de liaison 1 est montée une pièce tubulaire coulissante 1 munie d'au moins une pattelette 8 repliée à angle droit et servant d'appui pour un ressort 9 logé dans le logement axial 4 et travaillant en compression entre la pattelette 8 et le fond du logement 4. La pièce tubulaire 8 vient en butée contre un épaulement 10 de la boucle 5. La pièce 7 présente une encoche 11 de même profondeur que l'encoche 2, mais recourbée, de telle sorte qu'en position de repos, telle que représentée à la figure 1, l'entrée de cette encoche 11 ne coïncide pas avec l'encoche 2, mais se trouve en face du plan incliné 3, que le fond 12 de l'extrémité recourbée coïncide avec le fond de l'encoche 2 et que le bord 13 de l'encoche 11 vient fermer l'encoche 2 en retenant une attache 14 de forme annulaire, solidaire de la chaînette.

Pour ouvrir le fermoir il suffit de pousser la partie tubulaire 7 dans la direction indiquée par la flèche F1. La partie 7 vient dans la position représentée en traits mixtes, ouvrant l'encoche 2 et libérant l'attache 14.

Pour fixer l'attache au fermoir, il suffit de l'engager dans l'encoche 11 et de la faire glisser sur le plan incliné 3 en repoussant la partie 13 de la pièce 7 pour pénétrer dans l'encoche 2. La partie tubulaire 7 revient alors automatiquement en arrière en position de verrouillage.

Selon une variante d'exécution non représentée, la pièce tubulaire 7 pourrait venir verrouiller une encoche ou une fente de boucle telle que la fente 6, en position de repos. On aurait ainsi un fermoir double comprenant deux attaches détachables.

Un tel fermoir peut être fabriqué sous forme miniaturisé tout en présentant une grande solidité. Un tel fermoir peut présenter un diamètre extérieur inférieur à 1,5 mm et une longueur de 5 mm.

La forme d'exécution représentée à la figure 3 comprend une pièce de liaison 15 de forme cylindrique présentant également un logement axial 16 pour un ressort 17 travaillant en compression, ce logement 16 étant ouvert latéralement sur une partie au moins de sa profondeur. La pièce 15 présente un anneau 18 pour la fixation d'une des extrémités d'une chaînette cet anneau formant en outre butée pour une pièce tubulaire coulissante extérieure 19 munie d'au moins une pattelette transversale contre lequel vient s'appuyer le ressort 17. L'autre extrémité de la pièce de liaison 15 présente un logement axial 21 limité par deux bras élastiques 22 et 23 terminés chacun par un crochet 24 et 25. En position de repos, tel que représenté au dessin, ces deux bras 22 et 23 sont maintenus élastiquement fléchis l'un en direction de l'autre par deux plans inclinés 26 et 27 que présente l'intérieur de la partie tubulaire 19. L'attache est constituée d'un anneau 28 solidaire d'une tige 29 présentant une extrémité conique 30 et une rainure annulaire 31. Pour fixer l'attache 28 au fermoir on tient d'une main la partie tubulaire 19 et l'on pousse l'attache dans la partie 19, ce qui a pour effet de faire reculer la partie de liaison 15, permettant aux deux bras élastiques 22 et 23 de s'écarter, la tige 29 pouvant alors pénétrer entre ces deux bras de telle sorte que les deux crochets 24 et 25 viennent se placer en face de la rainure 31. Il suffit alors de relâcher la pièce tubulaire 9 pour que les bras 22 et 23 soient à nouveau fléchis par les plans inclinés 26 et 27, les crochets venant alors s'engager dans la rainure 31 et verrouiller la tige 29. Pour ouvrir le fermoir on tient la pièce de liaison 15 et l'on pousse la pièce tubulaire 19 en direction de l'attache, ce qui a pour effet de dégager les bras 22 et 23 des plans inclinés 26 et 27 et de libérer l'attache 29.

Le fermoir selon l'invention peut être de forme cylindrique ou prismatique.

Le nombre de ses composants étant réduit et de forme simple, la fabrication en est très aisée, soit par fraisage, étampage, moulage, etc. La rigidité de la pièce de liaison est renforcée par la pièce tubulaire, ce qui contribue à la solidité du fermoir.

Selon une variante d'exécution de la première forme d'exécution, le ressort 9 est supprimé et la pièce tubulaire 7 est montée à frottement gras sur la pièce de liaison 1. Il est ainsi possible de supprimer le logement axial 4 et de réduire le diamètre du fermoir.

Au lieu de la pattelette 8 il est possible d'utiliser une goupille transversale pour retenir le ressort dans les exécutions décrites.

- 1 -

0121953

Revendications

1. Fermoir destiné à relier les deux extrémités d'un article souple formant une boucle, comprenant une pièce de liaison autour de laquelle est montée une pièce tubulaire susceptible de se déplacer axialement sur la pièce de liaison pour verrouiller, respectivement libérer une attache destinée à être fixée à l'une des extrémités de l'article à fermer, caractérisé par le fait que la pièce tubulaire (7;19) est maintenue en position verrouillée par un ressort (9;17) logé dans la pièce de liaison (1;15) à l'opposé de l'attache verrouillée (14;28), de telle sorte que la libération de l'attache, c'est-à-dire l'ouverture du fermoir, s'effectue par le déplacement de la pièce tubulaire (7;19) en direction de l'attache, en comprimant ledit ressort.

2. Fermoir selon la revendication 1, caractérisé par le fait que la pièce de liaison comprend une boucle ouverte latéralement à son extrémité opposée à ladite attache, la pièce tubulaire fermant également cette boucle en position de repos.

3. Fermoir selon l'une des revendications 1 ou 2, caractérisé par le fait que la pièce de liaison (1) présente une encoche transversale (2) dans laquelle vient s'engager ladite attache (14), cette fente étant recouverte par la pièce tubulaire (7) en position de repos, fermée, cette pièce tubulaire présentant également une encoche (11,12) venant au moins approximativement coïncider avec l'encoche (2) de la pièce de liaison en position ouverte du fermoir.

4. Fermoir selon la revendication 3, caractérisé par le fait que l'encoche (2) de la pièce de liaison présente une rampe oblique (3) du côté opposé à l'attache, cette rampe (3) étant située en face de l'ouverture de l'encoche (11) de la partie tubulaire (7) en position fermée du fermoir.

5. Fermoir selon la revendication 3 ou 4, caractérisé par le fait que l'encoche de la pièce tubulaire (7) présente une forme en L (11, 12).

6. Fermoir selon la revendication 1, caractérisé par le fait que la pièce de liaison (15) présente au moins deux bras longitudinaux élastiques (22,23) terminés par un crochet (24,25) et que la pièce tubulaire (19) entourant la pièce de liaison (15) présente intérieurement des parois inclinées relativement à l'axe du fermoir contre lesquelles s'appuient lesdits bras élastiques de telle sorte qu'ils sont fléchis l'un en direction de l'autre et que leurs crochets s'engagent dans une rainure (31) ou dans des encoches d'une tige

7. Fermoir destiné à relier les deux extrémités d'un article souple formant une boucle, comprenant une pièce de liaison autour de laquelle est montée une pièce tubulaire susceptible de se déplacer axialement sur la pièce de liaison pour verrouiller, respectivement libérer une attache destinée à être fixée à l'une des extrémités de l'article à fermer, caractérisé par le fait que la pièce de liaison (1) présente une encoche transversale (2) dans laquelle vient s'engager l'attache (14), cette fente étant recouverte en position fermée, par la pièce tubulaire (7) qui présente également une encoche (11, 12) venant au moins approximativement coincider avec l'encoche (2) de la pièce de liaison en position ouverte du fermoir, la pièce tubulaire étant montée à frottement gras sur la pièce de liaison.

0121953

**Fig.1**

**Fig.2**

**Fig.3**

# 0121953

Office européen
des brevets

**RAPPORT DE RECHERCHE EUROPEENNE**

Numéro de la demande

EP 84 20 0261

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A- 456 591 (J.L. SORENSEN) <br> * Page 1, lignes 1-9, 20-60; page 2, lignes 1-61; figures * | 1,6 | A 44 C 11/02 <br> F 16 B 45/04 |
| | --- | | |
| X | FR-A- 455 168 (H. ROGGE) <br> * Page 1, lignes 39-64; page 2, lignes 1-60; figures * | 1,6 | |
| | --- | | |
| X | FR-A- 517 525 (W. SCHULER) <br> * Page 1, lignes 31-60; page 2, lignes 1-82 * | 1,6 | |
| | --- | | |
| Y | US-A-2 124 276 (F. STEIGENBERGER) <br> * Page 1, colonne 2, lignes 6-55; page 2, colonne 1, lignes 1-4; figures * | 1 | |
| A | | 2,4 | DOMAINES TECHNIQUES RECHERCHES (Int. Cl. 3) <br> <br> A 44 C |
| | --- | | |
| Y | FR-A-2 518 378 (J. LEROUX) <br> * Page 1, lignes 6-34; figures * | 1 | |
| A | | 2,3,5 | |
| X | | 7 | |
| | --- | | |
| Y | FR-E- 68 098 (A. LIVIO) <br> * En entier * | 1 | |
| | -/- | | |

Le présent rapport de recherche a été établi pour toutes les revendications

| Lieu de la recherche <br> LA HAYE | Date d'achèvement de la recherche <br> 15-06-1984 | Examinateur <br> GARNIER F.M.A.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

Office européen
des brevets

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | --- | 2 | |
| Y | FR-A-2 347 902 (E. CAGNATO)<br>* Revendications; figures * | 1 | |
| A | | 2,3,5 | |
| X | --- <br> ----- | 7 | |

DOMAINES TECHNIQUES
RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 15-06-1984 | GARNIER F.M.A.C. |